# DEMANDE DE BREVET EUROPEEN

(11) **EP 2 177 938 A1**
(43) Date de publication de la demande: **21.04.2010**
(21) Numéro de dépôt: 09173195.0
(22) Date de dépôt: 15.10.2009
(51) Int. Cl.: G02B 6/30

(54) **Structure et procédé d'alignement d'une fibre optique sur un guide d'ondes optique**

(30) Priorité: 20.10.2008 FR 0857124
(71) Demandeur: COMMISSARIAT A L'ENERGIE ATOMIQUE, 75015 Paris (FR)
(72) Inventeur: Kopp, Christophe, 38120, FONTANIL-CORNILLON (FR); Ben Bakir, Badhise, 38000, GRENOBLE (FR); Bernabe, Stéphane, 38430, MOIRANS (FR)
(74) Mandataire: de Beaumont, Michel

(57) **Abrégé**

L'invention concerne un dispositif optique comprenant au moins un premier guide d'ondes optique (25) couplé à un second guide d'ondes optique (29) de plus petite section qui y pénètre du côté d'une première extrémité. Le premier guide d'ondes est adapté à un couplage avec une fibre optique du côté d'une seconde extrémité. Une surface du premier guide d'ondes comporte un réseau de diffraction (33) adapté à l'introduction-extraction-renvoi de lumière dans le premier guide d'ondes optique.

## Description

### Domaine de l'invention

La présente invention concerne un circuit optique intégré et, plus particulièrement, un dispositif et un procédé d'alignement d'une fibre optique et d'un guide d'ondes formé en surface d'un circuit optique intégré.

### Exposé de l'art antérieur

Les circuits optiques intégrés sont de plus en plus utilisés dans le domaine des télécommunications, notamment pour la transmission, le traitement ou le stockage de données. Les circuits optiques intégrés peuvent avoir de nombreuses fonctions, par exemple de multiplexage, de démultiplexage, de modulation, de démodulation, de routage spectral, d'amplification, d'accumulation, de filtrage, de résonateur...

Les circuits optiques ou optoélectroniques intégrés sont généralement formés dans et sur des plaquettes semiconductrices similaires à celles utilisées en microélectronique. Un circuit optique intégré comprend un ou plusieurs composants optiques élémentaires réalisant un traitement sur un ou plusieurs faisceaux lumineux, les faisceaux lumineux étant acheminés entre les composants optiques élémentaires par des guides d'ondes optiques.

L'intégration de plus en plus de fonctions sur une même puce nécessite une miniaturisation des composants optiques intégrés et des guides d'ondes optiques associés. Lorsque les guides d'ondes ont des dimensions inférieures au micromètre, on parle de guides d'ondes submicroniques ou nanométriques. Actuellement, des guides d'ondes peuvent avoir des sections de l'ordre de 0,5 x 0,2 µm².

Pour des transmissions à moyennes et longues distances, c'est-à-dire de quelques mètres à plusieurs kilomètres, le moyen de transport optique privilégié est la fibre optique. Une fibre optique utilisable dans le domaine du visible et du proche infrarouge a couramment un diamètre compris entre 10 µm et quelques dizaines de micromètres. Par conséquent, il est nécessaire d'utiliser des systèmes de couplage de lumière entre les fibres optiques et les guides d'ondes submicroniques pour compenser la désadaptation dimensionnelle imposée par ces structures.

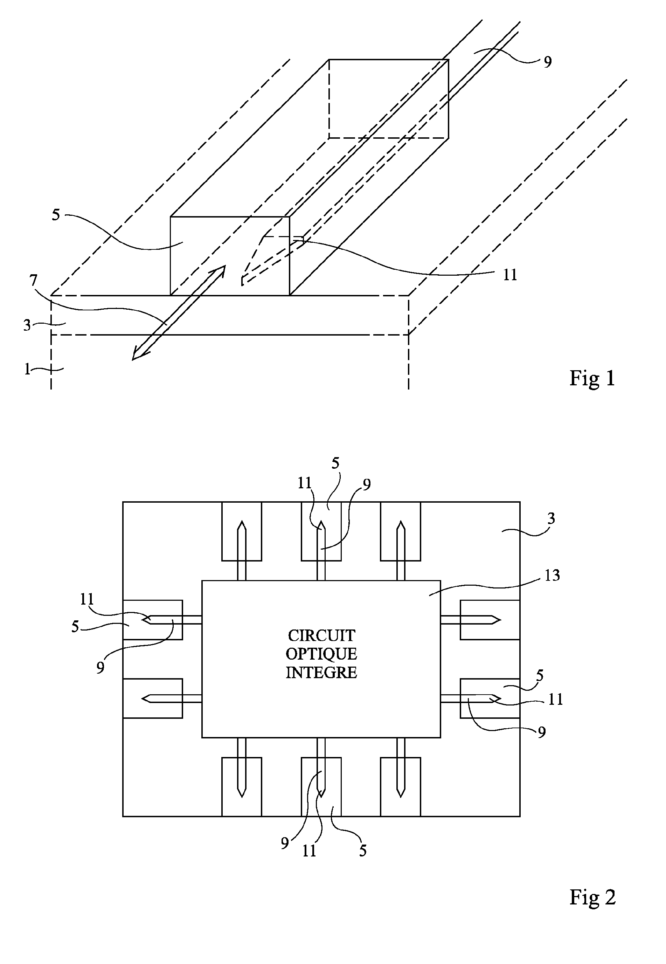

La figure 1 est une vue en perspective illustrant une structure connue de couplage entre une fibre optique et un guide d'ondes submicronique associé à un circuit optique intégré. Cette structure anamorphoseuse en forme de cône inversé est couramment désignée dans la technique par l'expression anglo-saxonne "inverse taper".

La structure de la figure 1 est formée sur un support de silicium 1 recouvert d'une couche isolante 3, par exemple en oxyde de silicium. Sur la couche isolante 3 est formé un guide d'ondes large 5, par exemple en oxyde de silicium SiO_{X}, ayant un indice optique compris entre 1,6 et 1,8. Le guide large 5 a typiquement une section ayant des dimensions de l'ordre de quelques micromètres, par exemple de 3 µm de largeur et de 1 µm de hauteur, et est destiné à être éclairé par une fibre optique (représenté en figure 1 par une flèche 7) par une première de ses extrémités sensiblement à l'aplomb d'un bord du support 1. Un guide d'ondes optique submicronique 9, formé en surface de la couche 3, s'étend dans le guide d'ondes large 5 et s'y rétrécit de façon progressive pour former une pointe 11 du côté de la première extrémité du guide d'ondes large 5. Le guide d'ondes submicronique 9 et la pointe 11 peuvent être en silicium (ayant un indice optique de 3,47). On notera qu'une couche isolante, non représentée et par exemple en oxyde de silicium stoechiométrique d'indice optique égal à 1,44, s'étend sur les guides d'ondes optiques 5 et 9 pour confiner les faisceaux lumineux dans ces guides d'ondes.

En fonctionnement normal, un faisceau lumineux de longueur d'onde et de polarisation adaptées pénétrant dans le guide d'ondes large 5 passe dans le guide d'ondes submicronique 9. Inversement, un faisceau lumineux transporté par le guide d'ondes submicronique 9 passe dans le guide d'ondes large 5.

La figure 2 illustre un exemple schématique d'entrées/sorties optiques d'une puce comprenant un circuit optique intégré 13. Sur une couche 3 d'oxyde de silicium formée sur un support de silicium s'étendent de nombreux guides d'ondes larges 5 dont des premières extrémités sont situées sensiblement à l'aplomb des bords de la puce. Chaque guide d'ondes large 5 est couplé à un guide d'ondes submicronique 9. Les guides d'ondes submicroniques 9 sont connectés au circuit optique intégré 13 réalisant par exemple une ou plusieurs des fonctions énumérées ci-dessus. A titre d'exemple, la puce de circuit optique intégré 3 peut avoir une surface comprise entre 1 mm² et 4 cm² et le circuit optique intégré 13 peut occuper la quasi-totalité de cette surface.

Les guides d'ondes larges 5 ont des sections de l'ordre de quelques micromètres carrés (par exemple entre 1 et 4 µm de côté). Le couplage avec une fibre optique ayant typiquement un diamètre de l'ordre de 10 µm se fait par l'intermédiaire d'un système optique comprenant une ou plusieurs lentilles, ou encore on confère à l'extrémité de chaque fibre optique une forme assurant un effet de lentille.

Pour que le circuit de la figure 2 fonctionne correctement, il est nécessaire que chaque fibre optique soit parfaitement alignée avec le guide d'ondes large qui lui est associé. Plusieurs méthodes ont été proposées pour réaliser cet alignement. Par exemple, le circuit optique intégré peut être prévu pour fournir un faisceau lumineux en sortie du guide d'ondes large 5 et la fibre optique est considérée comme étant alignée lorsque la quantité de lumière réceptionnée par celle-ci est maximale. On peut également éclairer le guide d'ondes large 5 avec la fibre optique et détecter, dans le circuit submicronique, un maximum d'intensité lumineuse.

Cependant, ces méthodes posent plusieurs problèmes. Tout d'abord, elles nécessitent de prévoir, dans le circuit optique intégré, des éléments dédiés à l'alignement des fibres optiques, par exemple des sorties de lumière ou des photodétecteurs. De plus, lors de l'alignement, le circuit optique intégré doit être en fonctionnement, et donc par exemple être alimenté électriquement. Enfin, la longueur d'onde des faisceaux lumineux utilisés pour l'alignement est obligatoirement celle des faisceaux lumineux utilisés dans le circuit optique intégré.

Un besoin existe d'un dispositif et d'un procédé permettant d'aligner une fibre optique sur un guide d'ondes optique, indépendamment du circuit optique intégré associé, de son mode de fonctionnement, de ses longueurs d'onde de fonctionnement et des états de polarisation de lumière qu'il requiert.

On connaît la demande de brevet WO 2004/088801 qui présente un dispositif comprenant, en surface d'un support, un premier guide d'ondes optique couplé à un second guide d'ondes de plus petite taille à une de ses extrémités. Un réseau de diffraction, formé en surface du premier ou du second guide d'ondes, est dimensionné pour filtrer des faisceaux présentant des longueurs d'ondes prédéterminées.

### Résumé

Un mode de réalisation de la présente invention prévoit un dispositif et un procédé d'alignement d'une fibre optique sur un guide d'ondes optique palliant au moins certains des inconvénients des dispositifs et procédés existants.

Ainsi, un mode de réalisation de la présente invention prévoit un dispositif optique comprenant au moins un premier guide d'ondes optique couplé à un second guide d'ondes optique de plus petite section qui y pénètre du côté d'une première extrémité, le premier guide d'ondes optique étant adapté à un couplage avec une fibre optique du côté d'une seconde extrémité, une surface du premier guide d'ondes optique comportant un réseau de diffraction adapté à l'introduction-extraction-renvoi de lumière dans le premier guide d'ondes optique, indépendamment du second guide d'ondes optique.

Selon un mode de réalisation de la présente invention, le réseau de diffraction est formé dans une portion éloignée de la région de couplage entre les premier et second guides d'ondes optiques.

Un mode de réalisation de la présente invention prévoit en outre un procédé d'alignement d'une fibre optique sur une extrémité libre d'un premier guide d'ondes optique couplé à un second guide d'ondes optique de plus petite section, le procédé comprenant une étape d'introduction-extraction-renvoi de lumière dans une portion du premier guide d'ondes optique, indépendamment du second guide d'ondes optique.

Selon un mode de réalisation de la présente invention, l'étape est une étape d'introduction d'un faisceau lumineux provenant d'une source lumineuse dans le premier guide d'ondes optique à l'aide d'un dispositif de couplage de la lumière formé en surface du guide d'ondes optique.

Selon un mode de réalisation de la présente invention, l'étape est une étape d'extraction d'un faisceau lumineux du premier guide d'ondes optique à l'aide d'un dispositif de couplage de la lumière formé en surface du premier guide d'ondes optique, le faisceau lumineux extrait étant détecté par un photodétecteur.

Selon un mode de réalisation de la présente invention, l'étape est une étape de renvoi, dans le premier guide d'ondes optique, d'un faisceau lumineux provenant de la fibre optique à l'aide d'un dispositif de couplage de la lumière formé en surface du guide d'ondes optique.

Selon un mode de réalisation de la présente invention, le dispositif de couplage de la lumière est un réseau de diffraction.

Selon un mode de réalisation de la présente invention, le faisceau lumineux introduit-extrait-renvoyé a une longueur d'onde quelconque dans le visible ou le proche infrarouge.

Un mode de réalisation de la présente invention prévoit en outre un procédé d'alignement de plusieurs fibres optiques sur plusieurs guides d'ondes optiques, comprenant une étape d'introduction d'un faisceau lumineux provenant d'une source lumineuse dans un premier guide d'ondes optique à l'aide d'un dispositif de couplage de la lumière formé en surface du premier guide d'ondes optique et comprenant une étape de séparation du faisceau lumineux en plusieurs faisceaux lumineux à destination de chacun des guides d'ondes optiques.

Selon un mode de réalisation de la présente invention, chaque fibre optique est alignée sur le guide d'ondes optique associé en détectant, sur sa sortie, un maximum d'énergie lumineuse transmise.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, précédemment décrite, illustre un dispositif de couplage de type anamorphoseur inverse ;
la figure 2, précédemment décrite, est un schéma simplifié illustrant les entrées/sorties optiques d'une puce sur laquelle est formé un circuit optique intégré ;
la figure 3 est une vue en perspective d'un dispositif selon un mode de réalisation de la présente invention ;
les figures 4 à 6 illustrent différents procédés d'alignement d'une fibre optique sur un dispositif selon un mode de réalisation de la présente invention ;
la figure 7 illustre une variante d'un procédé selon un mode de réalisation de la présente invention permettant d'aligner deux fibres optiques en une étape ; et
la figure 8 illustre une variante d'un procédé selon un mode de réalisation de la présente invention dans lequel plusieurs fibres optiques sont alignées en une seule étape.

Par souci de clarté, de mêmes éléments ont été désignés par de mêmes références aux différentes figures et, de plus, comme cela est habituel dans la représentation des circuits optiques intégrés, les diverses figures ne sont pas tracées à l'échelle.

### Description détaillée

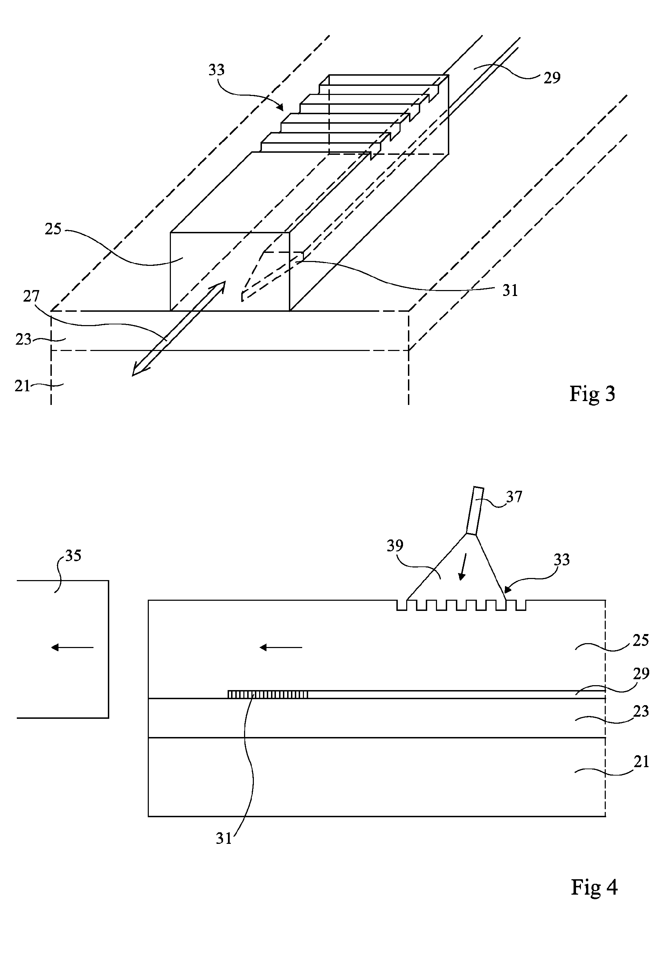

La figure 3 est une vue en perspective d'un dispositif selon un mode de réalisation de la présente invention.

Sur un support 21, par exemple de silicium, est formée une couche isolante 23, par exemple en oxyde de silicium. Sur la couche isolante 23 est formé un guide d'ondes large 25 ayant par exemple une section de quelques micromètres carrés et dont une extrémité est destinée à être éclairée par une fibre optique ou à fournir un faisceau lumineux en direction d'une fibre optique (direction d'une flèche 27 en figure 3). Dans le guide d'ondes large 25 et en surface de la couche isolante 23 est formé un guide d'ondes submicronique 29 ayant par exemple une largeur d'environ 0,5 µm et une hauteur d'environ 0,2 µm. Le guide d'ondes submicronique 29 se termine par une pointe 31 tournée vers l'extrémité du guide d'ondes 25 faisant l'interface avec la fibre optique. Le dispositif comprend en outre, sur le dessus du guide d'ondes large 25, un réseau de diffraction 33 permettant un couplage optique (introduction-extraction-renvoi de lumière) avec le guide d'ondes large 25. Le réseau de diffraction 33 est constitué, dans l'exemple représenté, de bandes perpendiculaires à la direction de la lumière et parallèles entre elles creusées en surface du guide d'ondes large 25. Le réseau de diffraction 33 peut également être formé par toute autre technique connue, notamment en formant des bandes métalliques perpendiculaires à la direction de la lumière et parallèles entre elles en surface du guide d'ondes large 25. A titre d'exemple, le réseau de diffraction peut être constitué de bandes en or ayant une épaisseur d'environ 200 nm, une longueur de 10 µm et une période de 1 µm pour un taux de remplissage de 50 %. On pourra aussi utiliser toute autre structure formant un réseau.

Le réseau de diffraction 33 est, de préférence, placé en amont de la pointe du guide d'ondes submicronique 29, loin de la région de couplage entre les guides d'ondes 25 et 29. Ceci évite la génération de pertes au niveau de la pointe 31 où le faisceau lumineux se confine ou se déconfine entre le guide d'ondes large 25 et le guide d'ondes submicronique 29. Ainsi, dans l'exemple représenté, le réseau de diffraction 33 est situé près de l'extrémité du guide d'ondes 25 opposée à celle destinée à être couplée à la fibre optique.

En figure 3, les isolations latérales et supérieures des guides d'ondes 25 et 29 n'ont pas été représentées. Ces isolations peuvent être constituées d'une couche isolante, par exemple en oxyde de silicium, ayant une épaisseur de l'ordre de 2 µm et entourant les guides d'ondes 25 et 29. On notera également que l'on pourra utiliser tout dispositif d'adaptation d'indice connu entre la fibre optique et le guide d'ondes large associé pour limiter les pertes lumineuses entre ces éléments, par exemple des structures liquides.

Le dispositif de la figure 3 permet l'alignement d'une fibre optique sur le guide d'ondes 25 de plusieurs façons, dont certaines seront décrites ci-après en relation avec les figures 4 à 6.

La figure 4 est une vue en coupe illustrant un premier procédé permettant l'alignement d'une fibre optique 35 et du guide d'ondes large 25 de la figure 3. Une source lumineuse 37, par exemple un laser, fournit un faisceau lumineux 39 en direction de la surface du réseau de diffraction 33. Une partie du faisceau lumineux atteignant le réseau de diffraction 33 est transmise par celui-ci dans le guide d'ondes large 25. Le guide d'ondes large 25 transmet la lumière jusqu'à son extrémité où l'on souhaite aligner la fibre optique 35. La fibre optique 35 et le guide d'ondes large 25 sont alignés lorsque la fibre optique transporte un maximum d'intensité lumineuse provenant du guide d'ondes large. Ainsi, pour aligner la fibre optique, on détecte, en sortie de celle-ci, l'intensité lumineuse qu'elle transporte et l'alignement est obtenu lorsque cette intensité lumineuse est maximale.

Avantageusement, pour aligner la fibre optique 35 sur le guide d'ondes large 25, il n'est pas nécessaire d'éclairer le réseau de diffraction de façon précise. En effet, il suffit que la source lumineuse 37 éclaire le réseau de diffraction 33, même de façon partielle, pour que de la lumière sorte du guide d'ondes large 25 et permette d'optimiser le positionnement relatif de la fibre optique 35. De plus, avantageusement, le faisceau lumineux 37 pourra avoir une longueur d'onde quelconque, par exemple du domaine visible ou de l'infrarouge. En effet, le faisceau lumineux 37 n'a pas à avoir une longueur d'onde particulière pour être au moins en partie couplé dans le guide d'ondes 25 par le réseau de diffraction.

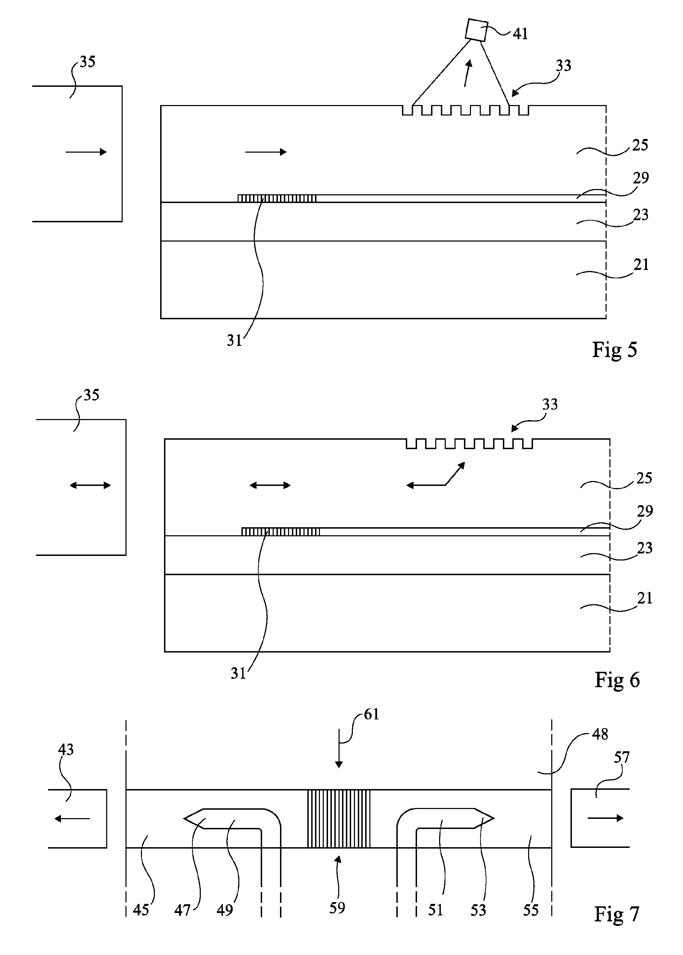

La figure 5 illustre un autre procédé d'alignement d'une fibre optique 35. Dans ce procédé, la fibre optique 35 éclaire le guide d'ondes large 25. Lorsque la fibre optique 35 est alignée sur le guide d'ondes large 25, celui-ci transporte la lumière fournie par la fibre optique vers le réseau de diffraction 33 qui délivre un faisceau lumineux vers l'extérieur, vers un photodétecteur 41. Ainsi, on détecte le bon alignement de la fibre optique 35 sur le guide d'ondes large 25 en choisissant la position de la fibre optique 35 permettant la détection d'un maximum d'intensité lumineuse au niveau du photodétecteur 41. On pourra éviter que le faisceau fourni par la fibre optique 35 au guide d'ondes large soit couplé dans le guide d'ondes submicronique 29 par l'intermédiaire de la pointe 31. Pour cela, la fibre optique pourra fournir un faisceau lumineux ayant une longueur d'onde externe à la bande passante de fonctionnement du dispositif de couplage anamorphoseur. On peut également prévoir que la fibre optique transporte un faisceau lumineux dont l'état de polarisation n'est pas couplé par le dispositif anamorphoseur.

La figure 6 illustre un autre procédé d'alignement de la fibre optique 35 sur le guide d'ondes large 25. Dans ce procédé, la fibre optique 35 éclaire le guide d'ondes optique 25 et on détecte la lumière réfléchie par le réseau de diffraction 33. En effet, lorsqu'un faisceau lumineux passe dans le guide d'ondes large 25 en direction du réseau de diffraction 33, une partie de ce faisceau lumineux est transmise par le réseau de diffraction vers l'extérieur du dispositif, une partie continue son chemin dans le guide d'ondes large 25 et une partie de la lumière est réfléchie dans le guide d'ondes large 25 par le réseau de diffraction 33. Ainsi, la fibre optique 35 est alignée lorsque le faisceau lumineux fourni par celle-ci passe dans le guide d'ondes large 25, se réfléchit partiellement sur le réseau de diffraction 33, repasse dans le guide d'ondes large 25, et est récupéré dans la fibre optique 35. De la même façon que dans le cas de la figure 5, dans ce procédé, la longueur d'onde et/ou la polarisation du faisceau lumineux fourni par la fibre optique 35 pourront être prévues pour minimiser le couplage optique dans le guide d'ondes submicronique 29. On pourra également utiliser toute longueur d'onde désirée pour l'alignement.

La figure 7 est une vue de dessus illustrant une variante des procédés ci-dessus dans laquelle on utilise un unique réseau de diffraction d'introduction-extraction de lumière pour aligner une fibre optique d'entrée et une fibre optique de sortie d'un circuit optique intégré. Le dispositif comprend une fibre optique d'entrée 43 qui est couplée, par l'intermédiaire d'un guide d'ondes large 45 et d'une pointe submicronique 47 formés sur un support 48, à un guide d'ondes submicronique 49 formé sur ce même support. Le guide d'ondes submicronique 49 est représenté partiellement et comprend, en surface du support 48, une portion courbe qui l'amène vers un circuit optique intégré non représenté. Une sortie du circuit optique intégré est connectée en entrée d'un guide d'ondes submicronique 51 qui est couplé, par l'intermédiaire d'une pointe submicronique 53 et d'un guide d'ondes large 55 formés sur le support 48, à une fibre optique de sortie 57.

Les guides d'ondes larges 45 et 55 se rejoignent sur le support 48 et un réseau de diffraction 59, de tout type connu permettant l'introduction de lumière dans les guides d'ondes larges 45 et 55, est formé, en surface des guides d'ondes larges 45 et 55, à leur intersection. Le réseau de diffraction 59 est éclairé par un faisceau lumineux 61 provenant d'une source lumineuse non représentée et le faisceau lumineux 61 pénètre, par l'intermédiaire du réseau de diffraction, dans les guides d'ondes larges 45 et 55 en direction des fibres optiques 43 et 57. Pour aligner les fibres optiques 43 et 57 sur les guides d'ondes larges 45 et 55, on détecte la position dans laquelle les fibres optiques reçoivent un maximum d'intensité lumineuse. On notera que, comme dans le cas de la figure 4, le faisceau lumineux 61 n'a pas besoin d'être parfaitement aligné sur le réseau de diffraction pour l'alignement puisqu'il suffit qu'une partie de ce faisceau soit couplée dans les guides d'ondes larges 45 et 55 pour permettre l'alignement des fibres optiques 43 et 57. De plus, la longueur d'ondes du faisceau 61 peut être différente de celle utilisée dans le circuit optique intégré.

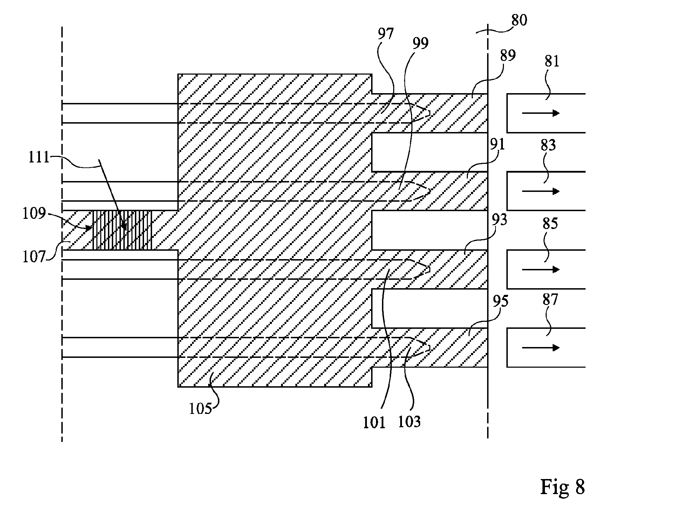

La figure 8 illustre, en vue de dessus, une variante permettant d'aligner plusieurs fibres optiques sur plusieurs guides d'ondes larges en une seule étape. Sur un support 80 sont formées quatre fibres optiques 81, 83, 85, 87 destinées à être alignées sur des premières extrémités de guides d'ondes larges, respectivement 89, 91, 93, 95. Dans l'exemple représenté, chaque guide d'ondes large 89, 91, 93, 95 est associé à un guide d'ondes submicronique, respectivement 97, 99, 101, 103, par l'intermédiaire de pointes adaptées (anamorphoseurs inverses). Les deuxièmes extrémités des guides d'ondes larges 89, 91, 93, 95 sont reliées, en surface du support isolant 80, à un dispositif diviseur de faisceau 105. Un guide d'onde large supplémentaire 107, formé sur le support 80, est connecté en entrée du diviseur 105. On notera que le dispositif diviseur 105 n'est pas représenté en détail dans les figures 8 et 9 et que tout type de dispositif diviseur de faisceau connu pourra être utilisé pour permettre le couplage entre le guide d'ondes 107 et les guides d'ondes 89, 91, 93, 95.

Un réseau de diffraction 109, formé en surface du guide d'ondes large 107, permet de coupler de la lumière provenant d'une source lumineuse (flèche 111) vers le guide d'ondes large 107. Pour aligner les fibres optiques 81, 83, 85, 87, on éclaire le réseau de diffraction (flèche 111) qui transmet une partie de cette lumière au guide d'ondes large 107. Le faisceau lumineux passe ensuite dans le dispositif diviseur 105 qui l'achemine vers chacun des guides d'ondes larges 89, 91, 93, 95. L'alignement des fibres optiques 81, 83, 85, 87 est obtenu de la même façon que dans le cas de la figure 7, lorsque les fibres optiques transportent un maximum d'intensité lumineuse.

Ainsi, le dispositif de la figure 8 permet d'aligner plusieurs fibres optiques. On notera qu'une combinaison des dispositifs des figures 7 et 8 peut permettre l'alignement de toutes les fibres optiques d'entrée/sortie d'un circuit optique intégré, par exemple d'un circuit tel que celui de la figure 2.

Des modes de réalisation particuliers de la présente invention ont été décrits. Diverses variantes et modifications apparaîtront à l'homme de l'art. En particulier, on a décrit ici un type particulier de guide d'ondes large. L'homme du métier comprendra que l'invention s'applique à l'alignement d'une fibre optique sur tout type de guide d'ondes large. L'invention s'applique également à tout système de couplage entre un guide d'ondes large et un guide d'ondes submicronique.

De plus, on a présenté ici un système d'introduction-extraction-renvoi de lumière sous la forme d'un réseau de diffraction formé en surface du guide d'ondes large. On notera que tout autre dispositif connu permettant d'introduire-extraire-renvoyer de la lumière dans un guide d'ondes large, indépendamment de la présence d'un guide d'ondes submicronique formé dans le guide d'ondes large, pourra également être utilisé à la place du réseau de diffraction. On notera cependant que l'utilisation du réseau de diffraction permet un encombrement réduit et un couplage optimisé.

## Revendications

1. Dispositif optique comprenant au moins un premier guide d'ondes optique (25) couplé à un second guide d'ondes optique (29) de plus petite section qui y pénètre du côté d'une première extrémité, le premier guide d'ondes optique étant adapté à un couplage avec une fibre optique (35) du côté d'une seconde extrémité, **caractérisé en ce qu'**une surface du premier guide d'ondes optique comporte un réseau de diffraction (33) adapté à l'introduction-extraction-renvoi de lumière dans le premier guide d'ondes optique, indépendamment du second guide d'ondes optique.

2. Dispositif selon la revendication 1, dans lequel le réseau de diffraction est formé dans une portion éloignée de la région de couplage entre les premier et second guides d'ondes optiques (25, 29).

3. Procédé d'alignement d'une fibre optique sur une extrémité libre d'un premier guide d'ondes optique (25) couplé à un second guide d'ondes optique (29) de plus petite section, **caractérisé en ce qu'**il comprend une étape d'introduction-extraction-renvoi de lumière dans une portion du premier guide d'ondes optique, indépendamment du second guide d'ondes optique.

4. Procédé selon la revendication 3, dans lequel ladite étape est une étape d'introduction d'un faisceau lumineux (39) provenant d'une source lumineuse (37) dans le premier guide d'ondes optique (25) à l'aide d'un dispositif de couplage de la lumière (33) formé en surface du guide d'ondes optique.

5. Procédé selon la revendication 3, dans lequel ladite étape est une étape d'extraction d'un faisceau lumineux du premier guide d'ondes optique (25) à l'aide d'un dispositif de couplage de la lumière (33) formé en surface du premier guide d'ondes optique (25), le faisceau lumineux extrait étant détecté par un photodétecteur (41).

6. Procédé selon la revendication 3, dans lequel ladite étape est une étape de renvoi, dans le premier guide d'ondes optique (25), d'un faisceau lumineux provenant de la fibre optique (35) à l'aide d'un dispositif de couplage de la lumière (33) formé en surface du guide d'ondes optique.

7. Procédé selon l'une quelconque des revendications 3 à 6, dans lequel le dispositif de couplage de la lumière (33) est un réseau de diffraction.

8. Procédé selon l'une quelconque des revendications 3 à 7, dans lequel le faisceau lumineux introduit-extrait-renvoyé a une longueur d'onde quelconque dans le visible ou le proche infrarouge.

9. Procédé d'alignement de plusieurs fibres optiques (81, 83, 85, 87) sur plusieurs guides d'ondes optiques (89, 91, 93, 95), comprenant une étape d'introduction d'un faisceau lumineux (111) provenant d'une source lumineuse dans un premier guide d'ondes optique (107) à l'aide d'un dispositif de couplage de la lumière (109) formé en surface du premier guide d'ondes optique (107) et comprenant une étape de séparation du faisceau lumineux en plusieurs faisceaux lumineux à destination de chacun des guides d'ondes optiques (81, 83, 85, 87).

10. Procédé selon la revendication 9, dans lequel chaque fibre optique est alignée sur le guide d'ondes optique associé en détectant, sur sa sortie, un maximum d'énergie lumineuse transmise.

## Revendications modifiées

### Revendications modifiées conformément à la règle 137(2) CBE.

**1.** Dispositif optique comprenant au moins un premier guide d'ondes optique (25) couplé à un second guide d'ondes optique (29) de plus petite section qui y pénètre du côté d'une première extrémité, le premier guide d'ondes optique étant adapté à un couplage avec une fibre optique (35) du côté d'une seconde extrémité, **caractérisé en ce qu'**une surface du premier guide d'ondes optique comporte un réseau de diffraction (33) adapté à l'introduction-extraction-renvoi de lumière dans le premier guide d'ondes optique, indépendamment du second guide d'ondes optique, en direction de la fibre optique.

**2.** Dispositif selon la revendication 1, dans lequel le réseau de diffraction est formé dans une portion éloignée de la région de couplage entre les premier et second guides d'ondes optiques (25, 29).

**3.** Procédé d'alignement d'une fibre optique sur une extrémité libre d'un premier guide d'ondes optique (25) couplé à un second guide d'ondes optique (29) de plus petite section, **caractérisé en ce qu'**il comprend une étape d'introduction-extraction-renvoi de lumière dans une portion du premier guide d'ondes optique, indépendamment du second guide d'ondes optique, en direction de la fibre optique.

**4.** Procédé selon la revendication 3, dans lequel ladite étape est une étape d'introduction d'un faisceau lumineux (39) provenant d'une source lumineuse (37) dans le premier guide d'ondes optique (25) à l'aide d'un dispositif de couplage de la lumière (33) formé en surface du guide d'ondes optique.

**5.** Procédé selon la revendication 3, dans lequel ladite étape est une étape d'extraction d'un faisceau lumineux du premier guide d'ondes optique (25) à l'aide d'un dispositif de couplage de la lumière (33) formé en surface du premier guide d'ondes optique (25), le faisceau lumineux extrait étant détecté par un photodétecteur (41).

**6.** Procédé selon la revendication 3, dans lequel ladite étape est une étape de renvoi, dans le premier guide d'ondes optique (25), d'un faisceau lumineux provenant de la fibre optique (35) à l'aide d'un dispositif de couplage de la lumière (33) formé en surface du guide d'ondes optique.

**7.** Procédé selon l'une quelconque des revendications 3 à 6, dans lequel le dispositif de couplage de la lumière (33) est un réseau de diffraction.

**8.** Procédé selon l'une quelconque des revendications 3 à 7, dans lequel le faisceau lumineux introduit-extrait-renvoyé a une longueur d'onde quelconque dans le visible ou le proche infrarouge.

**9.** Procédé d'alignement de plusieurs fibres optiques (81, 83, 85, 87) sur plusieurs guides d'ondes optiques (89, 91, 93, 95), comprenant une étape d'introduction d'un faisceau lumineux (111) provenant d'une source lumineuse dans un premier guide d'ondes optique (107) à l'aide d'un dispositif de couplage de la lumière (109) formé en surface du premier guide d'ondes optique (107) et comprenant une étape de séparation du faisceau lumineux en plusieurs faisceaux lumineux à destination de chacun des guides d'ondes optiques (81, 83, 85, 87).

**10.** Procédé selon la revendication 9, dans lequel chaque fibre optique est alignée sur le guide d'ondes optique associé en détectant, sur sa sortie, un maximum d'énergie lumineuse transmise.
